(19) Europäisches Patentamt
European Patent Office
Office européen des brevets

(11) **EP 3 375 288 B1**

(12) **EUROPEAN PATENT SPECIFICATION**

(45) Date of publication and mention
of the grant of the patent:
**23.09.2020 Bulletin 2020/39**

(51) Int Cl.:
*A21B 1/40* *(2006.01)*        *A21B 1/22* *(2006.01)*

(21) Application number: **18161656.6**

(22) Date of filing: **14.03.2018**

(54) **METHOD FOR BAKING FOOD, IN PARTICULAR BAKERY AND CONFECTIONARY PRODUCTS**

VERFAHREN ZUM ZUBEREITEN VON LEBENSMITTELN, INSBESONDERE BACKWAREN UND KONDITORWAREN

PROCÉDÉ POUR CUIRE DES PRODUITS ALIMENTAIRES, EN PARTICULIER DES PRODUITS DE BOULANGERIE ET PRODUITS DE PÂTISSERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2017 IT 201700028692**

(43) Date of publication of application:
**19.09.2018 Bulletin 2018/38**

(73) Proprietor: **ING. POLIN & C. S.p.A.**
**37135 Verona (IT)**

(72) Inventor: **COMETTI, Cesare**
**37135 VERONA (IT)**

(74) Representative: **Anselmi, Davide**
**Bugnion S.p.A.**
**Via Pancaldo, 68**
**37138 Verona (IT)**

(56) References cited:
**EP-A1- 2 333 420**        **EP-A2- 0 388 604**
**EP-A2- 1 872 659**        **US-A- 5 253 564**
**US-A1- 2005 236 385**        **US-A1- 2017 055 535**

**Description**

The present invention relates to a method for baking food, in particular bakery and confectionary products.

In particular, the sector in which the present invention is included is that of electric industrial ovens (for artisan bakeries) for baking bread and confectionery by contact with a baking surface. In these ovens the heat is produced by two sets of electrical resistors placed respectively below the baking surface and in the air above the baking surface, at a suitable distance. The heat reaches the product to be baked by conduction from the baking surface (also known as "base") and by radiation and convection from the set of resistors placed in the air above (also known as "top"). Currently, three technical solutions are known for controlling the temperature and the energy used.

In accordance with a first technical solution, two thermostats are used to control the top and the base temperature, respectively. The group of top resistors and that of the base resistors is controlled and regulated each independently through a dedicated thermocouple. The user can set different temperatures and in this way set the baking higher above or higher below.

For example, for cooking croissants the top temperature is set to 220°, while the base temperature is set to 180°.

This first technical solution represents the state of the art in terms of ease of use but requires high installed power (high energy consumption) since the top and base resistors can operate simultaneously.

To solve such problems, a second technical solution is known in which one thermostat and one electrical energy regulating device are used. In this way, the temperature of the baking chamber is one and is measured through a thermocouple. The electrical energy regulating device is a tool that divides the electrical energy between the top and base resistors in complementary percentages to 100 (or 10) that the user sets as preferred based on the baking result to be obtained (e.g. if the product is to be cooked more at the top, at the bottom, etc.).

For example, for baking Apulian bread, a temperature of 240° is set and the regulating device can be set with electrical energy use percentages between the top and the base of 50/50 or 70/30 along a predefined time cycle. A cycle can for example last 1 minute; therefore, in the case of regulating to 50/50, the base resistors operate for 30 seconds while for the remaining 30 seconds the top resistors operate.

In this way, the top and base resistors operate alternatively and therefore the required rated electrical power can be lowered (electrical energy saving).

However, such second known technique has drawbacks substantially connected with the fact that for every product to be baked, the user must set both the baking temperature and the regulating device percentages. Furthermore, it is a cheap system and not very precise since the division of the electrical energy could vary from one baking process to the other due to differences in the weight of the product, or for other reasons such as, for example, because the door is left open longer for baking, or because there are different amounts of product than usual (e.g. half load). To solve such problems, a third technical solution is known in which two thermostats are used, one of which for the base and one for the top and an electrical energy regulating device. The top and base temperatures are controlled and adjusted independently from each other through a dedicated thermocouple. In this way it is possible to adjust the baking to make it stronger or less strong at the high part or the low part of the baking chamber.

The regulating device allows the installed power to be halved and, at the same time, the electrical energy to be distributed in an optimal way with respect to the product to be baked and the required temperature.

For example, for baking pizza "alia pala" at 350° at the top and 250° at the base it is appropriate to direct most of the electrical energy to the top by setting the regulating device to 70%/top/30%base or 75/25.

If in the subsequent baking the pizza is to be baked in a tin at 300° at the top and 350° at the base, as well as changing the temperatures set, it is appropriate to re-set the regulating device directing more electrical energy to the base (e.g. 40% top and 60% base).

This third technique also has drawbacks connected with the fact that it is difficult for the user to set the oven because when the product to be baked changes, as well as changing the set temperatures, it is necessary to set the regulating device to divert the electrical energy more to the top or more to the base. The percentages set are usually estimated and fixed and, therefore, it is unlikely to able to exploit all the electrical energy available. Alternatively, it may be decided to block the electrical energy regulating device at 50% (50 top and 50 base) and thus halve the rated power, but in this case significant delays could be introduced in reaching the furthest set point and certain products could even be baked with unsatisfactory quality. Other known techniques are known from documents US2017/055535, EP0388604, EP2333420, EP1872659, US5253564, US2005/236385.

In this situation, the object of the present invention is to realise a method for baking food that obviates the above-cited drawbacks.

It is in particular an object of the present invention to realise a method for baking food that facilitates the setting of the baking parameters by the operator to obtain optimal baking of foods.

It is another object of the present invention to realise a method for baking food that allows the baking times of foods to be reduced while maintaining a low absorbed power value.

The objects indicated are substantially attained by a method for baking food according to what is described in the appended claims. Further characteristics and advantages of the present invention will more greatly emerge from the detailed description of some preferred but not exclusive embodiments of a method for baking food illustrated in the appended drawings, in which:

- figure 1 shows a lateral and partially transparent view of an oven performing a method according to the present invention with a plurality of chambers superimposed with each other;

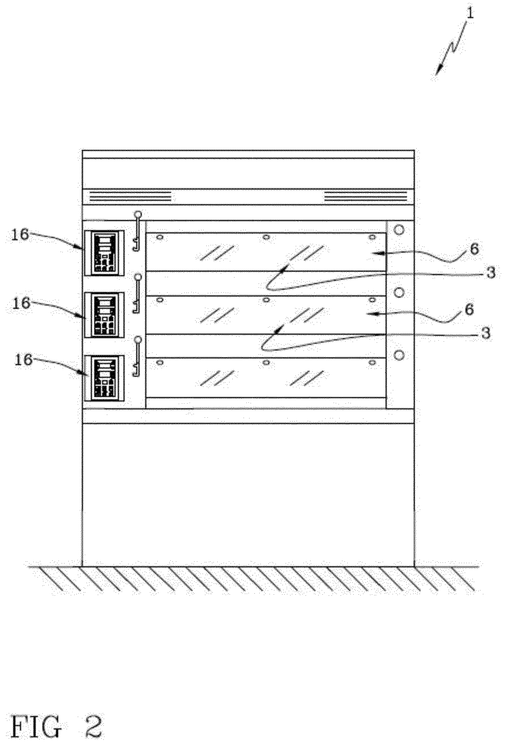

- figure 2 shows a front view of the oven of figure 1;
- figure 3 shows a schematic enlargement of a baking chamber of the oven of figure 1 with an electronic control system schematically indicated; and
- figure 4 shows a block diagram of the self-calibration steps of the oven. With reference to the figures mentioned, the number 1 generally denotes an oven for baking food 2 according to the present invention.

In particular, the oven 1 is preferably intended for baking bakery and/or confectionery products. However, the oven 1 could also be used for baking other types of food 2 not expressly indicated herein.

In particular, the oven 1 comprises at least one baking chamber 3 defined at the top by a top wall 4, at the bottom by a baking surface 5, laterally by fixed lateral walls (usually arranged on three sides) and frontally by a door 6 that can be opened for the insertion and removal of food 2.

In this type of oven, food 2 is baked by contact with the baking surface 5. In other words, the food 2 lies resting on the baking surface 5.

As already set out, for the present invention, the baking surface 5 delimits at the bottom the baking chamber 3, but in other embodiments it could be suspended with respect to a bottom wall which, at that point, delimits at the bottom the baking chamber 3 itself (in the latter case the baking surface 5 is a suspended shelf).

In the preferred case, the baking surface 5 is made of reinforced concrete or stone or steel or other materials not expressly indicated herein.

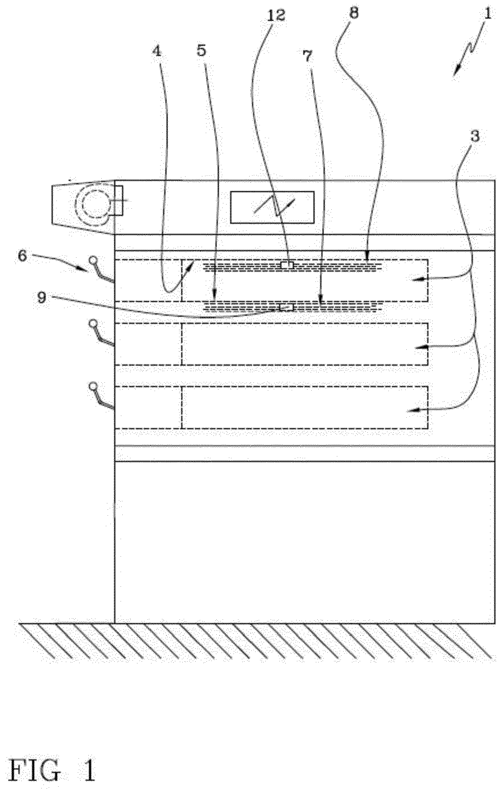

It is also to be noted that figure 1 shows a plurality of baking chambers 3 superimposed with each other. However, the present invention relates to an oven 1 that could have one or more baking chambers 3.

In particular, the oven 1 comprises a lower heating means 7 arranged below the baking surface 5 or inside it (e.g. incorporated therein). Furthermore, the oven 1 comprises an upper heating means 8 arranged above the baking surface 5 and distanced therefrom by a predefined distance so that the food 2 to be baked is arranged between the baking surface 5 and the upper heating means 8. For example, the upper heating means 8 could be incorporated into the top wall 4 or could be slightly distanced therefrom and therefore arranged inside the baking chamber 3 itself.

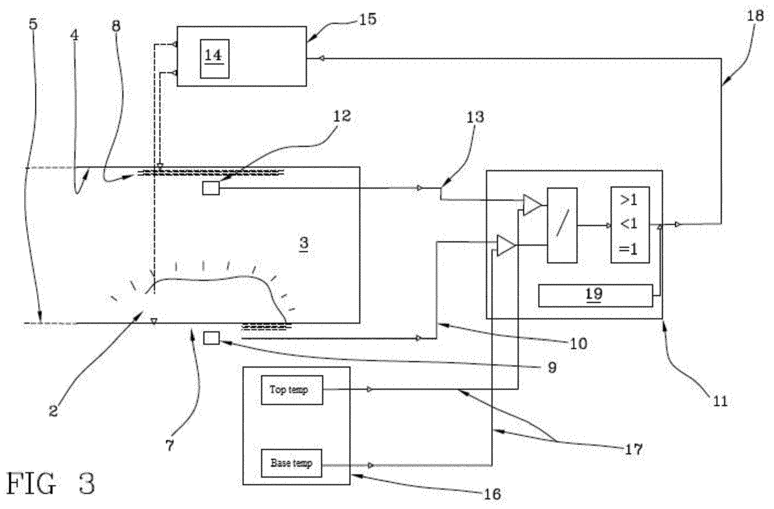

According to the preferred embodiment, the heating means (upper and lower) are of the electric type. Even more preferably, the heating means comprise a set of electrical resistors (in figures 1 and 3 they have been depicted by a plurality of parallel lines) for each zone of the baking chamber 3 (upper and lower). Such sets of electrical resistors are electrically powered and generate heat through the passage of electric current inside them.

Alternatively to electrical resistors, the heating means 7, 8 could be defined by conduits in which a hot fluid passes (e.g. water), or hot fumes, or other materials not expressly indicated herein.

Furthermore, the oven 1 comprises a lower temperature detector 9 arranged in proximity to the lower heating means 7 and configured to measure the temperature in a lower zone of the baking chamber 3 arranged below or at the baking surface 5.

Such temperature detector 9 is configured to generate a signal 10 for detecting the lower temperature containing data relating to the lower temperature detected and for sending it to a control unit 11.

Additionally, the oven 1 also comprises an upper temperature detector 12 arranged in proximity to the upper heating means 8 and configured to measure the temperature in an upper zone of the baking chamber 3 distanced and arranged above the baking surface 5. Preferably, the upper temperature detector 12 is arranged in proximity to the upper wall like, for example, in a top corner or top centre of the upper wall considering the longitudinal direction of the chamber.

Also in this case, the temperature detector is configured to generate a signal 13 for detecting the upper temperature containing data relating to said upper temperature and for sending it to the control unit 11. Preferably, each temperature detector 9, 12 (lower and upper) comprises a thermocouple that detects the temperature of the relative zone of the chamber and generates the detection signal.

Furthermore, the oven 1 comprises a regulating member 15 (also defined a "regulating device 15") for regulating the electrical energy for heating connected to the lower heating means 7 and to the upper heating means 8 and configured to divide the electrical energy between said lower heating means 7 and said upper heating means 8 according to a subdivision value 14.

In other words, the lower 7 and upper 8 heating means are connected through electrical cables to an electrical energy source (e.g. a socket). The regulating member 15 is interposed along such electrical cables and is configured to split the electrical energy at the input to the oven 1 between the upper 8 and lower 7 heating means. Therefore, the electrical cables downstream of the regulating device 15 (according to the input direction of the electric current) are split into electrical cables connected to the upper heating means 8 and electrical cables connected to the lower heating means 7.

In other words, the regulating member 15 is arranged upstream of the temperature control circuits (and of the activation of the respective heating means 7, 8) of the various internal zones of the baking chamber. Furthermore, the regulating member 15 for regulating the electrical energy is configured to receive from the control unit 11 a sub-division signal 18 containing a sub-division value 14 to be used for a baking cycle. In fact, the heating means (upper and lower) are configured to operate according to one or more baking cycles in which each cycle has a predefined duration (e.g. 1 minute).

It is to be noted that the regulating device 15 is preferably configured to split the electrical energy between said lower 7 and said upper 8 heating means over time. In other words, the lower heating means 7 operates for a certain amount of time, after which the upper heating means 8 operates for the remaining time according to the total duration of a cycle. In yet other words, the lower 7 or upper heating means follow each other, over time, with the upper 8 or lower 7 heating means, respectively.

The sub-division value 14 indicates (usually as a percentage) the operating time of each heating means with respect to the other. In other words, the regulation is preferably performed over time (first one and then the other heating means).

Alternatively, the upper 8 and lower 7 heating means operate simultaneously according to the percentages defined by the sub-division value 14 (in that case the load of the resistors is regulated).

Therefore, as already mentioned, the oven 1 comprises a control unit 11 connected to the lower 9 and upper 12 temperature detectors, to the electrical energy regulating member 15 and to the lower 7 and upper heating means.

Additionally, the oven 1 also comprises an external communication interface 16 for a user configured to receive information related to the (ideal) temperatures set by the user for the upper heating means 8 and for the lower heating means 7. In other words, the communication interface 16 is configured to generate an ideal temperature signal 17 pre-set by the user and to forward it to the control unit 11 to which it is connected. The ideal temperature signal 17 contains data related to the lower and upper pre-set temperature value to be reached.

Furthermore, the control unit 11 is configured for

receiving the detection signals of the lower 10 and upper temperature 13;
comparing each lower and upper temperature value contained in said signals 10, 13 with the respective pre-set lower and upper temperature value to be reached (pre-set by the user through the communication interface 16);
determining which temperature value, between the lower and upper temperature values, is the most distant from the respective pre-set temperature value to be reached;
calculating a sub-division value 14 as a function of said comparison so as to favour the heating means 7, 8 arranged at the zone in which the temperature value detected is more distant from the respective pre-set temperature value to be reached, so as to accelerate the reaching of the latter;
sending a sub-division signal 18 to the regulating member 15 containing said calculated sub-division value 14.

In such way, the regulating member 15 receives the pre-set temperature value and forwards more or less electrical energy to the upper 8 or lower heating means.

For example, if it is calculated that the pre-set upper temperature is more distant to reach with respect to the pre-set lower temperature value (as a function of the respective temperature values detected) the sub-division value 14 calculated favours the heating of the upper heating means 8 (e.g. 70% of electrical energy above and 30% of electrical energy below). Preferably, the control unit 11 is configured to perform said comparison between each lower and upper temperature value with the respective pre-set lower and upper temperature value through a subtraction operation between the pre-set lower temperature value and the lower temperature value detected, and between the pre-set upper temperature value and the upper temperature value detected.

Furthermore, to determine which temperature value is more distant from the respective pre-set temperature value to be reached, the control unit 11 is configured to perform a ratio between the results of said subtractions between each pre-set temperature value and the corresponding temperature value detected.

In other words, the control unit 11 is configured to perform the following operation:

$$\frac{\Delta T_{top}}{\Delta T_{base}} = \frac{(T_{ImpTop} - T_{RilTop})}{(T_{ImpBase} - T_{RilBase})} \quad \begin{cases} > 1 \\ \\ \leq 1 \\ \\ = 1 \end{cases}$$

where:

- $T_{ImpTop}$ refers to the pre-set upper temperature value;
- $T_{RilTop}$ refers to the upper temperature value detected by the detector 12;
- $T_{ImpBase}$ refers to the pre-set lower temperature value;
- $T_{RilBase}$ refers to the lower temperature value detected by the detector 9.

The control unit 11 is configured to calculate a sub-division value 14 such as to provide more electrical energy to the heating means 7, 8 arranged at the zone where the difference between the pre-set and the detected temperature is the numerator of the ratio, if such ratio is greater than one. Or, the control unit 11 is configured to calculate a sub-division value 14 such as to provide more electrical energy to the heating means arranged at the zone where the difference between the pre-set and the detected temperature is the denominator of the ratio, if such ratio is less than one. Or, the control unit 11 is configured to calculate a sub-division value 14 such as to provide the same electrical energy to the lower 7 and upper heating means, if the above ratio is equal to one.

In this way, the zone of the baking chamber 3 that has a greater need of electrical energy is favoured so as to more quickly eliminate the "gap" between the detected temperature and the temperature to be reached for each zone so that the two zones reach the desired temperature almost simultaneously, but without increasing the rated power required. Furthermore, it is to be noted that reaching the pre-set temperature, for each zone, also depends on factors related to the construction of the oven 1 and of the baking chamber 3: materials, dimensions, ... Consequently, to calculate the sub-division value 14 it is necessary to know such factors (and the user of the oven 1 does not always know them).

Therefore, the control unit 11 is configured to perform a self-calibration cycle 19 of the oven 1 comprising the following steps:

- heating and/or cooling at least one of the lower 7 or upper heating means;
- detecting the variation in the related temperature value detected over time as a function of said heating and/or cooling;
- comparing said variation in the temperature value detected over time with pre-defined parameters (table) so as to understand the characteristics related to the baking chamber 3 and/or the baking surface 5 and/or the materials of which the oven 1 is made;
- calibrating the sub-division value 14 calculated as a function of said comparison.

In other words, the sub-division value 14 intended for the regulating device 15 is calibrated according to the pre-defined parameters contained in a pre-compiled table for each type of material and/or dimension of the baking chamber 3.

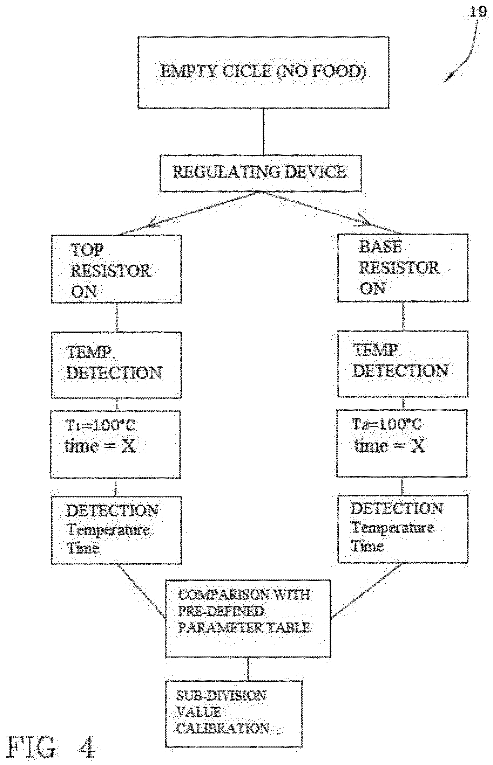

With reference to figure 4, an empty self-calibration cycle is described (i.e. without food inside the baking chamber) which is preferably actuated before the baking operations and, even more preferably, during the heating step of the baking chamber 3.

For example, for each zone the time necessary to reach a pre-defined temperature is calculated (e.g. from 0°C to 100°C) and from this the configuration of the chamber can be deduced. For example, if the baking surface is made of stone, it will take longer to reach the pre-defined temperature (e.g. 100°C) and therefore from the comparison with the table it can be deduced that the oven is in the stone surface configuration. Alternatively, if instead of a stone surface, a metal surface were used, the latter would reach the temperature more quickly.

Therefore, once the control unit 11 knows the configuration of the oven through the self-calibration procedure (e.g. stone or metal surface) the sub-division value 14 can be modified as a function of said configuration. For example, if it is deduced that the surface is made of stone, it is possible to remove electrical energy at the low zone slightly before reaching the pre-defined temperature as stone yields heat according to its own time delay.

In other words, the sub-division value 14 is a function of the particular configuration or conformation of the baking chamber.

The subject matter of the present invention is a method for baking food 2, in particular bakery and confectionery products, in the oven 1 described above. In particular, the method follows directly from the above description in relation to the oven 1 which is incorporated below in its entirety.

The method comprises the following operating steps, preferably actuated during a food 2 baking cycle:

detecting the lower temperature value through the temperature detector 9;

detecting the upper temperature value through the temperature detector 12;

splitting the electrical energy between the lower heating means 7 and the upper heating means 8 according to a sub-division value 14 through the heating electrical energy regulating member 15 connected to the lower heating means 7 and to the upper heating means 8;

comparing each lower and upper temperature value contained in said signals with respective pre-set lower and upper temperature values to be reached;

determining which temperature value, between the lower and upper temperature values, is the most distant from the respective pre-set temperature value to be reached;

calculating the sub-division value 14 as a function of said comparison so as to favour the heating means arranged at the zone in which the temperature value detected is more distant from the respective pre-set temperature value to be reached, so as to accelerate the reaching of the latter;

sending a sub-division signal 18 to the regulating member 15 containing said calculated sub-division value 14.

In particular, the step of performing said comparison between each lower and upper temperature value with the respective pre-set lower and upper temperature value is performed through a subtraction operation between the pre-set lower temperature value and the lower temperature value detected, and between the pre-set upper temperature value and the upper temperature value detected according to the formula provided above. Additionally, the step of determining which temperature value is more distant from the respective pre-set temperature value to be reached, comprises the following sub-steps:

making a ratio between the results of said subtractions between each pre-set temperature value and the corresponding temperature value detected;

providing more electrical energy to the heating means arranged at the zone where the difference between the detected and the pre-set temperature is the numerator of the ratio, if such ratio is greater than one; or

providing more electrical energy to the heating means arranged at the zone where the difference between the detected and the pre-set temperature is the denominator of the ratio, if such ratio is less than one; or

providing equal electrical energy to the upper 8 and lower heating means if the ratio is equal to one.

Finally, as already disclosed, the method comprises a self-calibration cycle 19 of the oven 1, preferably performed "empty" (without food 2 to be cooked present in the baking chamber 3) comprising the following steps:

- heating and/or cooling at least one of the lower 7 or upper heating means;
- detecting the variation in the related temperature value detected over time as a function of said heating and/or cooling;
- comparing said variation in the temperature value detected over time with pre-defined parameters so as to understand the characteristics related to the baking chamber 3 and/or the baking surface 5 and/or the materials of which the oven 1 is made;
- calibrating the sub-division value 14 calculated as a function of said comparison.

The present invention reaches the set objects.

In particular, the invention allows the approach to the oven to be facilitated even for inexperienced operators (typically used in points of sale sectors) since it is no longer necessary to set the regulating device manually.

Furthermore, the invention enables the simultaneous reaching of the sets of the two loads to be obtained without increasing the electrical energy consumption. The continuous monitoring of the temperature and the dynamic calculation of the percentages of the regulating device allows the distribution of electrical energy, balancing it on the loads of the baking chamber.

Furthermore, the invention allows the automatic adaptation of the system to the baking configuration variables to be obtained due, for example, to the type of product to be baked, the quantity of baked product, the useful height of the chambers, the type of baking surface, thanks to the presence of the self-calibration cycle.

Also worthy of note is that the present invention is relatively easy to realise and also that the cost connected to the actuation of the invention is not very high.

**Claims**

1. A method for baking food (2), in particular bakery and confectionery products, in an oven (1) having a baking chamber (3) and a lower (7) and upper (8) heating means of the electric type with respect to the food (2) to be baked, that is arranged on a baking surface (5); wherein said lower (7) and upper (8) heating means are connectable through electrical cables to said electrical energy source; said method comprising the following operating steps:

   detecting a lower temperature value at a lower zone of the baking chamber (3) arranged below or at the baking surface (5);

   detecting an upper temperature value at an upper zone of the baking chamber (3) distanced and arranged above the baking surface (5);

   splitting a predefined amount of installed electrical power at the input from said source between said lower heating means (7) and said upper heating means (8) according to a sub-division value (14) through a heating electrical power regulating member (15) connected to the lower heating means (7) and to the upper heating means (8); and interposed along said electrical cables of the upper (8) and lower (7) heating means and said electrical energy source,

   comparing each lower and upper temperature value contained in said signals (10), (13) with respective pre-set lower and upper temperature values to be reached;

   **characterised in that** it comprises the steps of:

   determining which temperature value, between the lower and upper temperature values, is the most distant from the respective pre-set temperature value to be reached;

   calculating a sub-division value (14) as a function of said comparison so as to favour the supply of electrical power to the heating means arranged at the zone in which the temperature value detected is more distant from the respective pre-set temperature value to be reached, so as to accelerate the reaching of the latter;

   sending a sub-division signal (18) of the electrical power to the regulating member (15) containing said calculated sub-division value (14) so that the regulating member (15) favours the supply of electrical power to the lower (7) or upper (8) heating means without exceeding said pre-defined amount of installed electrical power;

   said step of performing said comparison between each lower and upper temperature value with the respective pre-set lower and upper temperature value is performed through a subtraction operation between the pre-set lower temperature value and the lower temperature value detected, and between the pre-set upper temperature value and the upper temperature value detected;

   said step of determining which temperature value is more distant from the respective pre-set temperature value to be reached, comprises the following sub-steps:

   making a ratio between the results of said subtractions between each pre-set temperature value and the corresponding temperature value detected;

   providing more electrical power to the heating means arranged at the zone where the difference between the detected and the pre-set temperature is the numerator of the ratio, if such ratio is greater than one and vice versa.

2. The method according to claim 1 **characterised in that** it comprises a self-calibration cycle (19) of the oven (1) comprising the following steps:

   - heating and/or cooling at least one of the lower (7) or upper heating means;
   - detecting the variation in the related temperature value detected over time as a function of said heating and/or cooling;
   - comparing said variation in the temperature value detected over time with pre-defined parameters so as to understand the characteristics related to the baking chamber (3) and/or the baking surface (5) and/or the materials of which the oven (1) is made;
   - calibrating the sub-division value (14) calculated as a function of said comparison.

3. The method (1) according to any one of claims 1 to 2 **characterised in that** said electrical power sub-division step is actuated by alternating said electrical power supply over time to the lower (7) and upper (8) heating means in succession according to said sub-division value (14), wherein said sub-division value (14) represents the operating time of the lower heating means (7) and the upper heating means (8).

4. The method (1) according to any one of claims 1 to 2 **characterised in that** said electrical power sub-division step is actuated by supplying electrical power simultaneously to the lower (7) and upper (8) heating means according to said sub-division value (14), wherein said sub-division value (14) represents a sub-division percentage of electrical power between the lower heating means (7) and the upper heating means (8).

5. The method according to any one of claims 1 to 4 **characterised in that** the steps of calculating the sub-division value (14) and sending a sub-division signal (18) are actuated independently by an activation of the lower heating means (7) and/or of the upper heating means (8).

**Patentansprüche**

1. Verfahren zum Backen von Lebensmitteln (2), insbesondere Back- und Konditorwaren, in einem Ofen (1) mit einer Backkammer (3) und unteren (7) und oberen (8) Heizmittel vom elektrischen Typ in Bezug auf die zu backenden Lebensmittel (2), die auf einer Backfläche (5) angeordnet sind; wobei die unteren (7) und oberen (8) Heizmittel über elektrische Kabel mit der elektrischen Energiequelle verbunden werden können; wobei das Verfahren die folgenden Betriebsschritte umfasst:

Erfassen eines niedrigeren Temperaturwertes in einer unteren Zone der Backkammer (3), die unterhalb oder an der Backfläche (5) angeordnet ist;
Erfassen eines oberen Temperaturwertes in einer oberen Zone der Backkammer (3), die über der Backfläche (5) angeordnet und beabstandet ist;
Aufteilen einer vordefinierten Menge installierter elektrischer Energie am Eingang von der Quelle zwischen den unteren Heizmitteln (7) und den oberen Heizmitteln (8) gemäß einem Unterteilungswert (14) durch ein Heizungsstromversorgungsregelelement (15) verbunden mit den unteren Heizmitteln (7) und mit den oberen Heizmitteln (8); und entlang der elektrischen Kabel der oberen (8) und unteren (7) Heizmittel und der elektrischen Energiequelle angeordnet,
Vergleichen eines jeden in den Signalen (10), (13) enthaltenen unteren und oberen Temperaturwertes mit jeweiligen voreingestellten unteren und oberen zu erreichenden Temperaturwerten;
**dadurch gekennzeichnet, dass** es die folgenden Schritte umfasst:

Bestimmen, welcher Temperaturwert zwischen dem unteren und oberen Temperaturwert von dem jeweiligen voreingestellten zu erreichenden Temperaturwert am entferntesten ist;
Berechnen eines Unterteilungswertes (14) als Funktion des Vergleichs, um die Zuführung von elektrischer Energie zu den Heizmitteln zu begünstigen, die in der Zone angeordnet sind, in der der erfasste Temperaturwert von dem jeweiligen voreingestellten zu erreichenden Temperaturwert entfernter ist, um das Erreichen des letzteren zu beschleunigen;
Senden eines Unterteilungssignals (18) der elektrischen Energie an das Regelelement (15), das den berechneten Unterteilungswert (14) enthält, sodass das Regelelement (15) die Zuführung von elektrischer Energie zu den unteren (7) oder oberen (8) Heizmitteln begünstigt, ohne die vordefinierte Menge der installierten elektrischen Energie zu überschreiten;
der Schritt zum Durchführen des Vergleichs zwischen einem jeden unteren und oberen Temperaturwert mit dem jeweiligen voreingestellten unteren und oberen Temperaturwert wird durch eine Subtraktionsoperation zwischen dem voreingestellten unteren Temperaturwert und dem erfassten unteren Temperaturwert und zwischen dem voreingestellten oberen Temperaturwert und dem erfassten oberen Temperaturwert durchgeführt;
der Schritt zum Bestimmen, welcher Temperaturwert von dem jeweiligen voreingestellten zu erreichenden Temperaturwert entfernter ist, umfasst die folgenden Unterschritte:

Herstellen eines Verhältnisses zwischen den Ergebnissen der Subtraktionen zwischen einem jeden voreingestellten Temperaturwert und dem entsprechenden erfassten Temperaturwert;
Bereitstellen von mehr elektrischer Energie für die Heizmittel, die in der Zone angeordnet sind, in der die Differenz zwischen der erfassten und der voreingestellten Temperatur der Zähler des Verhältnisses ist, wenn dieses Verhältnis größer als eins ist und umgekehrt.

2. Verfahren nach Anspruch 1, **dadurch gekennzeichnet, dass** es einen Selbstkalibrierungszyklus (19) des Ofens (1) umfasst, der die folgenden Schritte umfasst:

- Heizen und/oder Kühlen mindestens eines der unteren (7) oder oberen Heizmittel;
- Erfassen der Änderung des zugehörigen Temperaturwertes, der über die Zeit als Funktion der Erhitzung und/oder Abkühlung erfasst wird;
- Vergleichen der Änderung des über die Zeit erfassten Temperaturwertes mit vordefinierten Parametern, um die Eigenschaften in Bezug auf die Backkammer (3) und/oder die Backfläche (5) und/oder die Materialien, aus denen der Ofen (1) besteht, zu verstehen;
- Kalibrieren des als Funktion des Vergleichs berechneten Unterteilungswertes (14).

3. Verfahren (1) nach einem der Ansprüche 1 bis 2, **dadurch gekennzeichnet, dass** der Unterteilungsschritt für die elektrische Energie durch Abwechseln der Zuführung von elektrischer Energie über die Zeit zu den unteren (7) und oberen (8) Heizmitteln nacheinander gemäß dem Unterteilungswert (14) betätigt wird, wobei der Unterteilungswert (14) die Betriebszeit der unteren Heizmittel (7) und der oberen Heizmittel (8) darstellt.

4. Verfahren (1) nach einem der Ansprüche 1 bis 2, **dadurch gekennzeichnet, dass** der Unterteilungsschritt für die elektrische Energie durch gleichzeitiges Zuführen von elektrischer Energie an die unteren (7) und oberen (8) Heizmittel gemäß dem Unterteilungswert (14) betätigt wird, wobei der Unterteilungswert (14) einen Unterteilungsprozentsatz der elektrischen Energie zwischen den unteren Heizmitteln (7) und den oberen Heizmitteln (8) darstellt.

5. Verfahren nach einem der Ansprüche 1 bis 4, **dadurch gekennzeichnet, dass** die Schritte zum Berechnen des Unterteilungswertes (14) und zum Senden eines Unterteilungssignals (18) unabhängig durch eine Aktivierung der unteren Heizmittel (7) und/oder der oberen Heizmittel (8) betätigt werden.

**Revendications**

1. Procédé pour cuire des produits alimentaires (2), en particulier des produits de boulangerie et de confiserie, dans un four (1) comportant une chambre de cuisson (3) et des moyens de chauffage inférieur (7) et supérieur (8) du type électrique par rapport à les produits alimentaires (2) à cuire étant disposé sur une surface de cuisson (5) ; dans lequel lesdits moyens de chauffage inférieur (7) et supérieur (8) peuvent être raccordés par des câbles électriques à ladite source d'énergie électrique ; ledit procédé comprenant les étapes de fonctionnement suivantes :

détecter une valeur de température inférieure en correspondance d'une zone inférieure de la chambre de cuisson (3) disposée en dessous ou en correspondance de la surface de cuisson (5) ;
détecter une valeur de température supérieure en correspondance d'une zone supérieure de la chambre de cuisson (3) éloignée et disposée au-dessus de la surface de cuisson (5) ;
diviser une amplitude prédéfinie de puissance électrique installée à l'entrée de ladite source entre ledit moyen de chauffage inférieur (7) et ledit moyen de chauffage supérieur (8) selon une valeur de subdivision (14) par l'intermédiaire d'un élément de réglage (15) de la puissance électrique de chauffage raccordé au moyen de chauffage inférieur (7) et au moyen de chauffage supérieur (8) ; et interposé le long desdits câbles électriques des moyens de chauffage supérieur (8) et inférieur (7) et de ladite source d'énergie électrique, comparer chaque valeur de température inférieure et supérieure contenue dans lesdits signaux (10), (13) avec des valeurs de température inférieure et supérieure préréglées respectives à atteindre ;
**caractérisé en ce qu'**il comprend les étapes de :

déterminer quelle valeur de température, entre les valeurs de température inférieure et supérieure, est la plus éloignée de la valeur de température préréglée respective à atteindre ;
calculer une valeur de subdivision (14) en fonction de ladite comparaison de sorte à favoriser l'alimentation en énergie électrique aux moyens de chauffage disposés en correspondance de la zone dans laquelle la valeur de température détectée est la plus éloignée de la valeur de température préréglée respective à atteindre, de manière à accélérer le fait d'atteindre cette dernière ;
envoyer un signal de subdivision (18) de la puissance électrique à l'élément de réglage (15) contenant ladite valeur de subdivision (14) calculée de sorte que l'élément de réglage (15) favorise l'alimentation en puissance électrique du moyen de chauffage inférieur (7) ou supérieur (8) sans dépasser ladite amplitude prédéfinie de puissance électrique installée ;
ladite étape consistant à effectuer ladite comparaison entre chaque valeur de température inférieure et supérieure avec les valeurs de température inférieure et supérieure préréglées respectives est réalisée à travers une opération de soustraction entre la valeur de température inférieure préréglée et la valeur de température inférieure détectée, et entre la valeur de température supérieure préréglée et la valeur de température supérieure détectée ;

ladite étape consistant à déterminer quelle valeur de température est la plus éloignée de la valeur de température préréglée respective à atteindre, comprend les sous-étapes suivantes :

établir un rapport entre les résultats desdites soustractions entre chaque valeur de température préréglée et la valeur de température correspondante détectée ;

fournir davantage de puissance électrique aux moyens de chauffage disposés en correspondance de la zone où la différence entre la température détectée et préréglée est le numérateur du rapport, si ce rapport est supérieur à un et vice versa.

2. Procédé selon la revendication 1, **caractérisé en ce qu'**il comprend un cycle d'auto-étalonnage (19) du four (1) comprenant les étapes suivantes :

- chauffer et/ou refroidir au moins un des moyens de chauffage inférieur (7) ou supérieur ;
- détecter la variation de la valeur de la température correspondante détectée au fil du temps en fonction dudit chauffage et/ou refroidissement ;
- comparer ladite variation de la valeur de température détectée au fil du temps avec des paramètres prédéfinis afin de comprendre les caractéristiques liées à la chambre de cuisson (3) et/ou à la surface de cuisson (5) et/ou aux matériaux dont est constitué le four (1) ;
- étalonner la valeur de subdivision (14) calculée en fonction de ladite comparaison.

3. Procédé (1) selon l'une quelconque des revendications 1 à 2, **caractérisé en ce que** ladite étape consistant à subdiviser la puissance électrique est actionnée en alternant ladite alimentation en puissance électrique au fil du temps vers les moyens de chauffage inférieur (7) et supérieur (8) successivement selon ladite valeur de subdivision (14), dans lequel ladite valeur de subdivision (14) représente le temps de fonctionnement des moyens de chauffage inférieur (7) et supérieur (8).

4. Procédé (1) selon l'une quelconque des revendications 1 à 2, **caractérisé en ce que** ladite étape consistant à subdiviser la puissance électrique est actionnée en fournissant de la puissance électrique simultanément aux moyens de chauffage inférieur (7) et supérieur (8) selon ladite valeur de subdivision (14), dans lequel ladite valeur de subdivision (14) représente un pourcentage de subdivision de la puissance électrique entre le moyen de chauffage inférieur (7) et le moyen de chauffage supérieur (8).

5. Procédé selon l'une quelconque des revendications 1 à 4, **caractérisé en ce que** les étapes consistant à calculer la valeur de subdivision (14) et à envoyer un signal de subdivision (18) sont actionnées indépendamment par une activation du moyen de chauffage inférieur (7) et/ou du moyen de chauffage supérieur (8).

FIG 1

FIG 2

FIG 3

Base temp

Top temp

14

19

=1
<1
>1

19

```
┌─────────────────────────────┐
│   EMPTY CICLE (NO FOOD)      │
└─────────────────────────────┘
              │
              │
     ┌──────────────────┐
     │ REGULATING DEVICE │
     └──────────────────┘
       ╱              ╲
      ╱                ╲
┌──────────┐      ┌──────────┐
│   TOP    │      │   BASE   │
│ RESISTOR │      │ RESISTOR │
│   ON     │      │   ON     │
└──────────┘      └──────────┘
     │                 │
┌──────────┐      ┌──────────┐
│  TEMP.   │      │  TEMP.   │
│DETECTION │      │DETECTION │
└──────────┘      └──────────┘
     │                 │
┌──────────┐      ┌──────────┐
│ T₁=100°C │      │ T₂=100°C │
│ time = X │      │ time = X │
└──────────┘      └──────────┘
     │                 │
┌───────────┐     ┌───────────┐
│ DETECTION │     │ DETECTION │
│Temperature│     │Temperature│
│Time       │     │Time       │
└───────────┘     └───────────┘
       ╲              ╱
        ╲            ╱
    ┌──────────────────┐
    │ COMPARISON WITH   │
    │ PRE-DEFINED       │
    │ PARAMETER TABLE   │
    └──────────────────┘
              │
        ┌──────────────┐
        │ SUB-DIVISION │
        │ VALUE        │
        │ CALIBRATION  │
        └──────────────┘
```

FIG 4

$T_1 = 100°C$
time = X

$T_2 = 100°C$
time = X

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017055535 A
- EP 0388604 A
- EP 2333420 A
- EP 1872659 A
- US 5253564 A
- US 2005236385 A